# FASCICULE DE BREVET EUROPEEN

(11) **EP 3 894 237 B1**
(45) Date de publication et mention de la délivrance du brevet: **28.02.2024**
(21) Numéro de dépôt: 19870040.3
(22) Date de dépôt: 05.12.2019
(51) Int. Cl.: B60C 11/03, B60C 11/12, B60C 11/13

(54) **BANDE DE ROULEMENT POUR PNEUMATIQUE**
LAUFFLÄCHE FÜR EINEN REIFEN
TREAD FOR A TYRE

(30) Priorité: 14.12.2018 FR 1872956; 30.01.2019 FR 1900818
(43) Date de publication de la demande: 20.10.2021
(73) Titulaire: COMPAGNIE GENERALE DES ETABLISSEMENTS MICHELIN, 63000 Clermont-Ferrand (FR)
(72) Inventeur: BELARBI, Houria, 63040 CLERMONT-FERRAND Cedex 9 (FR); DJABOUR, Walid, 63040 CLERMONT-FERRAND Cedex 9 (FR)
(74) Mandataire: M.F.P. Michelin
(86) Numéro de dépôt international: PCT/FR2019/052939
(87) Numéro de publication internationale: WO 2020/120881

(56) Documents cités:
- EP-A1- 0 908 330
- WO-A1-2011/073313
- WO-A1-2017/174925
- JP-A- 2010 052 699
- JP-A- 2013 244 854
- US-A1- 2011 125 465

## Description

### Domaine technique

La présente invention concerne un pneumatique pour véhicule automobile avec une bande de roulement pourvue de cavités externes comprenant des moyens pour l'éjection de cailloux.

### Technique antérieure

Les documents WO 2011/039194 et WO 2011/073313 divulguent une bande de roulement présentant au moins une rainure continue comprenant une pluralité de cavités externes débouchant sur la surface de roulement à l'état neuf et une pluralité de cavités internes placées radialement et en totalité à l'intérieur de la bande de roulement à l'état neuf. Chaque cavité externe d'une rainure continue est reliée à au moins deux cavités internes de la même rainure par des canaux de liaison assurant la continuité entre lesdites cavités internes et externes. Il est ainsi possible d'obtenir une bande de roulement pourvue de rainures permettant d'avoir une performance égale ou supérieure à la performance minimale de sécurité en drainage et cela quel que soit le niveau d'usure de cette bande tout en améliorant sensiblement la performance en durée de vie sur usure, réduisant la résistance au roulement et en améliorant l'endurance de la bande de roulement aux agressions. Cependant, dans certaines conditions de roulage, des objets étrangers comme des cailloux peuvent se coincer dans les cavités et venir agresser le fond desdites cavités. Il y a alors un risque d'amorcer la génération de fissures dans le caoutchouc.

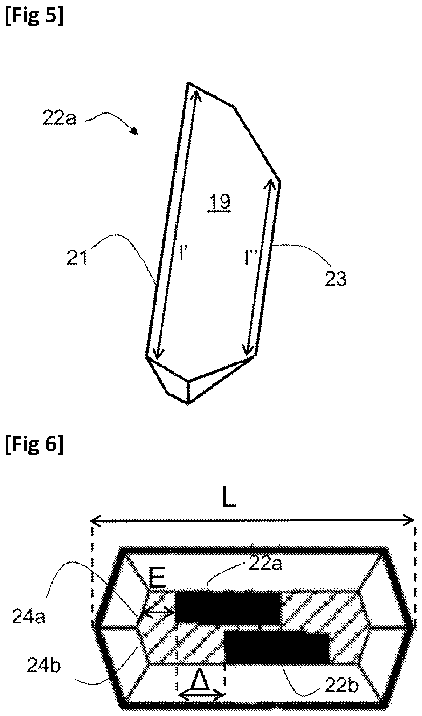

Afin de limiter le coincement de cailloux dans la bande de roulement, le document US3727661 divulgue l'utilisation de moyens pour l'éjection de cailloux. Ces moyens comprennent une pluralité de barres globalement parallélépipédiques faisant protubérance à partir du fond d'une rainure. Les barres sont reliées aux parois de la rainure et elles se succèdent dans la longueur de ladite rainure. Dans un mode de réalisation illustré à la figure 5, chaque barre présente, vue en coupe, une section en forme de croissant avec une embase d'épaisseur globalement constante dans le fond de la rainure et deux branches remontant à partir de ladite embase vers la surface de la bande de roulement, respectivement le long des parois de la rainure. La largeur des branches diminue en direction de la surface de la bande de roulement. Or au cours des roulages, la bande de roulement est soumise à des contraintes mécaniques qui génèrent des amorces de fissures dans l'embase des barres, entraînant une dégradation prématurée des moyens pour l'éjection de cailloux.
Afin de limiter le coincement de cailloux dans la bande de roulement, le document WO 2017/174925 A1 **divulgue également** l'utilisation d'autres moyens pour l'éjection de cailloux .
Il existe donc un besoin d'obtenir une bande de roulement pourvue de rainures permettant d'avoir une performance égale ou supérieure à la performance minimale de sécurité en drainage et ce quel que soit le niveau d'usure de cette bande tout en ayant dans ladite bande de roulement des moyens d'éjection de cailloux qui soient pérennes.

### Exposé de l'invention

La présente invention vise à remédier à cet inconvénient.

Plus particulièrement, la présente invention vise à améliorer les capacités de drainage d'une bande de roulement tout en ayant des moyens d'éjection de cailloux qui durent dans le temps.

L'invention concerne une bande de roulement pour pneumatique poids lourd comprenant une surface de roulement destinée à venir en contact avec une chaussée au cours d'un roulage. La bande de roulement comprend une pluralité de cavités ne débouchant pas sur la surface de roulement de la bande de roulement à l'état neuf, dites cavités internes, lesdites cavités internes formant avec les cavités externes une rainure continue qui s'étend selon la direction circonférentielle.
La bande de roulement comprend des cavités débouchant sur la surface de roulement à l'état neuf, dite cavité externes. Les cavités externes comprennent un fond et au moins deux parois latérales en vis-à-vis s'étendant à partir de ce fond. De plus, les cavités externes comprennent des moyens pour l'éjection de cailloux au cours du roulage.

Selon une caractéristique générale de l'invention, les moyens pour l'éjection de cailloux comprennent deux protubérances faisant saillie par rapport au fond de la cavité externe, les deux protubérances étant disposées en vis-à-vis, au moins en partie, l'une par rapport à l'autre à une distance d. Chaque protubérance s'incline à partir d'une paroi latérale de la cavité externe vers le plan central P. La distance d entre deux protubérances en vis-à-vis est inférieure ou égale à 10% de la largeur W de la cavité externe.

La distance d entre les deux protubérances permet de découpler lesdites protubérances. Ainsi, au cours d'un roulage les deux protubérances peuvent avoir des mouvements totalement indépendants. On limite alors la génération de fissures dans les moyens pour l'éjection de cailloux.

Par « pneumatique », on entend tous les types de bandages élastiques soumis à une pression interne ou non.

Par « matériau caoutchoutique », on entend un élastomère diénique, c'est-à-dire de manière connue un élastomère issu d'au moins en partie (c'est-à-dire homopolymère ou copolymère) de monomères diènes (monomères porteurs de doubles liaisons carbone-carbone, conjuguées ou non).

Par « bande de roulement » d'un pneumatique, on entend une quantité de matériau caoutchoutique délimitée par des surfaces latérales et deux surfaces principales dont l'une, appelée surface de roulement, est destinée à entrer en contact avec une chaussée lorsque le pneumatique roule. La bande de roulement comprend une pluralité de découpures (incisions, rainures) se prolongeant en direction des surfaces latérales.

Avantageusement, la distance d entre les deux protubérances est inférieure ou égale à 5 % de la largeur W de la cavité externe.

Avantageusement, la distance d est inférieure ou égale à 1 mm.

Dans un mode de réalisation, au moins une protubérance présente une surface de contact adaptée pour entrer en contact avec un caillou. La surface de contact présente une zone d'accroche avec la paroi latérale de la cavité externe de longueur l' et une zone de délimitation dans la cavité externe opposée à la zone d'accroche et de longueur l". La longueur l'de la zone d'accroche est supérieure à la longueur l" de la zone de délimitation.

En optimisant la forme de la protubérance, on diminue le volume occupé par cette protubérance dans la cavité externe. L'évacuation de l'eau hors de ladite cavité externe en cas de chaussée mouillée, est alors favorisée.

Dans un mode de réalisation, l'inclinaison de la protubérance est supérieure ou égale à 17°. Ainsi, on optimise encore davantage le volume occupé par la protubérance dans la cavité externe.

Avantageusement, la paroi latérale de la cavité externe est inclinée, au moins en partie, par rapport à la surface de roulement de la bande de roulement, et l'inclinaison de la protubérance est supérieure à l'inclinaison de la dite paroi latérale.

Avantageusement, la paroi latérale de la cavité externe a une partie inclinée s'étendant jusqu'à la surface de roulement et une partie droite, la protubérance s'étendant à partir de la partie droite de ladite paroi latérale.

Dans un mode de réalisation, les protubérances sont décalées l'une par rapport à l'autre selon une direction circonférentielle.

Dans un mode de réalisation, la bande de roulement comprend une pluralité de cavités ne débouchant pas sur la surface de roulement de la bande de roulement à l'état neuf, dites cavités internes, lesdites cavités internes formant avec les cavités externes une rainure.

Dans un mode de réalisation, la bande de roulement appartient à un pneumatique poids lourd.

La présente invention sera mieux comprise à la lecture de la description détaillée de modes de réalisation pris à titre d'exemples nullement limitatifs et illustrés par les dessins annexés sur lesquels :
- [Fig 1] la figure 1 est une vue de dessus d'une partie de bande de roulement comprenant des moyens pour l'éjection de cailloux selon un premier mode de réaliation de l'invention ;
- [Fig 2] la figure 2 est une vue agrandie des moyens pour l'éjection de cailloux de la figure 1 ;
- [Fig 3] la figure 3 est une vue des moyens pour l'éjection de cailloux selon une coupe A-A ;
- [Fig 4] la figure 4 est une vue en perspective de moyens pour l'éjection de cailloux selon un second mode de réalisation de l'invention ;
- [Fig 5] la figure 5 est une vue agrandie d'une protubérance des moyens pour l'éjection de cailloux de la figure 4 ;
- [Fig 6] la figure 6 est une variante dans l'arrangement de protubérances appartenant aux moyens pour l'éjection de cailloux des figures 1 et 2.

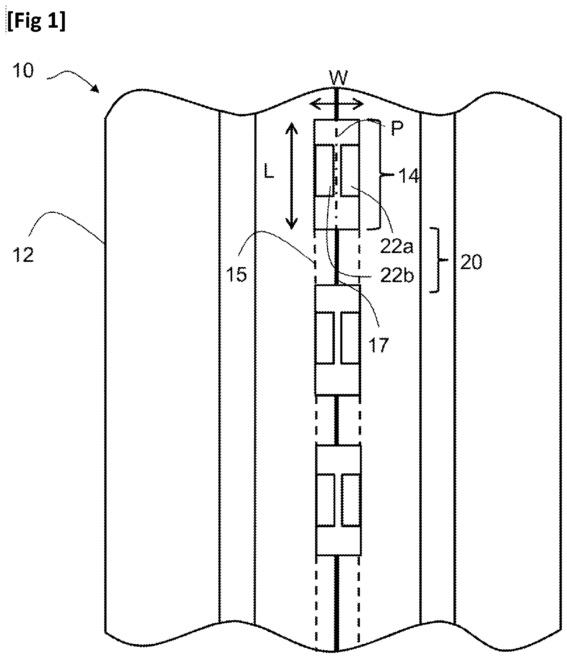

Sur la figure 1 est représenté schématiquement une partie d'une bande de roulement 12 d'un pneumatique 10. La bande de roulement 12 comprend une surface de roulement destinée à venir en contact avec une chaussée lorsque le pneumatique roule. La bande de roulement comprend une pluralité de découpures (incisions, rainures). Le pneumatique 10 est destiné à être monté sur une jante d'un véhicule automobile, par exemple un véhicule de type poids lourd.

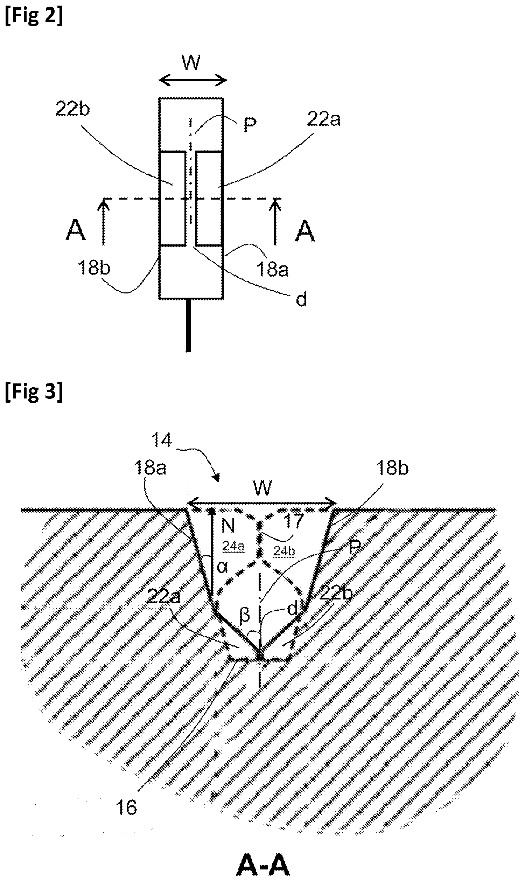

La bande de roulement 12 comprend au moins une cavité 14 débouchant sur la surface de roulement à l'état neuf, dite cavité externe 14. Dans le mode de réalisation de la figure 1, la bande de roulement 12 comprend au moins trois cavités externes 14 qui sont alignées selon une direction circonférentielle. Chaque cavité externe 14 comprend une longueur L, une largeur W et un plan central P séparant ladite cavité externe en deux demi-cavités externes. La bande de roulement 12 comprend également des cavités 15 qui ne débouchent pas sur la surface de roulement à l'état neuf, dite cavité interne 15. Ces cavités internes 15 sont présentes dans la profondeur de la bande de roulement et elles s'ouvrent sur la surface de roulement lorsque l'usure deladite bande de roulement atteint un certain niveau d'usure. A ce niveau d'usure, les cavités externes 14 et les cavités internes 15 forment alors une rainure continue qui s'étend selon la direction circonférentielle. Par « rainure », on entend une découpure dont la distance entre les parois de matière est telle que les parois de cette rainure ne peuvent pas venir en contact l'une contre l'autre dans les conditions usuelles de roulage. Dans le cas d'une rainure, cette distance entre les parois de matière est supérieure à 2 millimètres. La bande de roulement 12 comprend également au moins une incision 17 disposée entre deux cavités externes 14. L'incision 17débouche à la fois sur la surface de roulement de la bande de roulement et dans une cavité interne 15. Par « incision », on entend une découpure dont la distance entre les parois de matière est appropriée pour permettre la mise en contact au moins partielle des parois opposées délimitant ladite incision lors du passage dans le contact avec le sol. Dans le cas d'une incision, cette distance entre les parois de matière est au plus égale à 2 millimètres. La figure 2 est une vue agrandie d'une cavité externe 14 de la figure 1. La cavité externe 14 comprend un fond 16 et au moins deux parois latérales 18a, 18b en vis-à-vis s'étendant à partir dudit fond 16. Les parois latérales 18a, 18b sont inclinées d'un angle α par rapport à une direction normale (N) à la surface de roulement de la bande de roulement comme il est illustré à la figure 3. Afin de faciliter l'éjection des cailloux hors de la cavité externe 14, l'angle α est supérieur ou égal à 15°. La cavité externe 14 comprend également des moyens supplémentaires 20 pour l'éjection de cailloux au cours du roulage. Ces moyens 20 pour l'éjection de cailloux comprennent deux protubérances 22a, 22B qui font saillie par rapport au fond 16 de la cavité. Chaque protubérance 22a, 22b s'étend respectivement à partir d'une des parois latérales 18a, 18b en se faisant face. Les protubérances 22a, 22b sont ainsi disposées en vis-à-vis, au moins en partie, l'une par rapport à l'autre, à une distance d. Cette distance d est inférieure ou égale à 10% de la largeur W de la cavité externe 14. Préférentiellement, la distance d entre les deux protubérances est inférieure ou égale à 5 % de la largeur W de la cavité externe. Dans un exemple de réalisation particulier, la distance d est inférieure ou égale à 1 mm. Comme il est illustré à la figure 3, les protubérances 22a, 22b s'inclinent vers le plan central P. Les protubérances 22a, 22b forment ainsi un angle β avec la direction normale (N). Cet angle β est supérieur ou égal à 17°. Dans un mode de réalisation non limitatif, l'angle β des protubérances 22a, 22b est supérieur ou égal à l'angle α des parois latérales 18a, 18b. Dans un autre mode de réalisation non limitatif, la somme des angles α et β est supérieure ou égale à 35°. Dans un autre mode de réalisation non limitatif, la somme des angles α et β est inférieure ou égale à 40°.

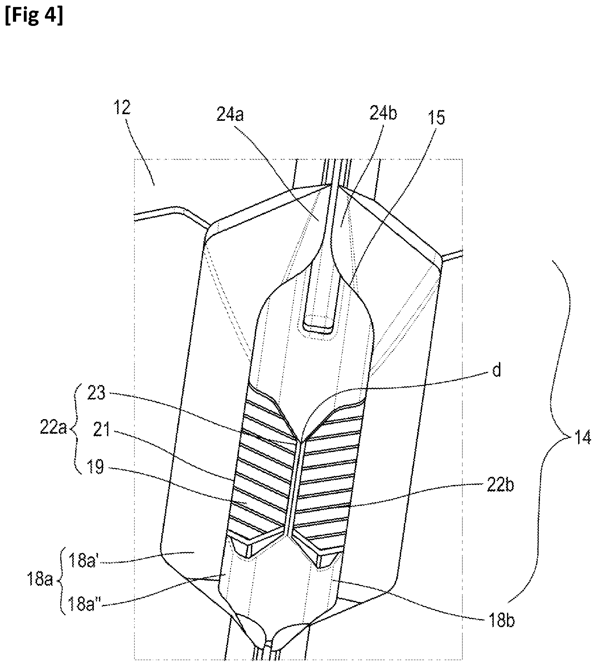

Les figures 4 et 5 illustrent un second mode de réalisation des moyens 20 pour l'éjection de cailloux. Dans ce second mode de réalisation, chaque protubérance 22a, 22b présente une surface de contact 19 adaptée pour entrer en contact avec des cailloux au cours des roulages du pneumatique. On va maintenant décrire la surface de contact 19 en lien avec la protubérance 22a. Cette surface de contact 19 présente une zone d'accroche 21 avec la paroi latérale 18a de longueur l' et une zone de délimitation 23 dans la cavité externe 14 opposée à la zone d'accroche et de longueur l". La longueur l' de la zone d'accroche est supérieure à la longueur l" de la zone de délimitation de sorte que la surface de contact 19 a globalement la forme d'un trapèze régulier. Dans un mode de réalisation non limitatif, la surface de contact 19 comprend une texture particulière faisant contraste avec le reste de la surface de roulement 12 de la bande de roulement. Cette texture est formée par un agencement organisé d'une pluralité d'éléments, tout ou partie des éléments de l'agencement étant la répétition d'un même élément de base. Cet élément de base peut être un brin, une lamelle ou une protubérance en forme de parallélépipède. Dans une variante de réalisation, cet élément de base est en creux.

Dans l'exemple de réalisation de la figure 4, la paroi latérale 18a, 18b de la cavité externe 14 a une partie inclinée 18a' et une partie droite 18a" prolongeant ladite partie inclinée 18a'. La partie inclinée 18a' s'étend jusqu'à la surface de roulement de la bande de roulement et la partie droite 18a" s'étend jusqu'au fond 16 de la cavité externe 14. La protubérance 22a s'étend ici à partir de la partie droite 18a" de la paroi latérale 18a. On notera que la partie inclinée 18a' comprend deux lèvres 24a, 24b qui délimitent l'entrée de la cavité interne 15. Ces deux lèvres 24a, 24b sont notamment illustrées aux figures 3 et 4. On notera également que le fond 16 de la cavité externe appartient à la rainure continue qui se prolonge dans la cavité interne 15.

La figure 6 illustre une variante dans l'arrangement des protubérances 22a, 22b. Dans ce mode de réalisation particulier les protubérances 22a, 22b se font face mais sont décalées d'une distance Δ. La zone d'action des protubérances 22a, 22b est alors élargie ce qui permet de mieux agir contre le coincement de cailloux dans cette cavité externe 14. On notera qu'il est nécessaire de conserver un espace E minimal entre les protubérances 22a, 22b et les lèvres 24a, 24b qui délimitent l'entrée de la cavité interne 15. Cet espace E minimal correspond à 5% de la longueur L de la cavité externe 14.

L'invention n'est pas limitée aux modes de réalisation et variantes présentées et d'autres modes de réalisation et variantes apparaîtront clairement à l'homme du métier **sans sortir du cadre de l'invention tel que défini par les revendications ci-jointes.**

Sur les figures 1 à 4 et 6 l'espacement d est représenté comme étant rectiligne. En variante, cet espacement peut-être non rectiligne, par exemple en zigzag.

## Revendications

1. Bande de roulement pour pneumatique poids lourd comprenant une surface de roulement (12) destinée à venir en contact avec une chaussée au cours d'un roulage, ladite bande de roulement (10) comprenant des cavités débouchant sur la surface de roulement à l'état neuf, dites cavités externes (14), la bande de roulement comprenant une pluralité de cavités (15) ne débouchant pas sur la surface de roulement de la bande de roulement à l'état neuf, dites cavités internes (15), lesdites cavités internes formant avec les cavités externes (14) une rainure continue selon une direction circonférentielle.
- lesdites cavités externes (14) ayant une longueur L, une largeur W et un plan central P,
- lesdites cavités externes (14) comprenant un fond (16) et au moins deux parois latérales (18a, 18b) en vis-à-vis s'étendant à partir dudit fond (16), lesdites cavités externes (14) comprenant des moyens (20) pour l'éjection de cailloux au cours dudit roulage **caractérisés en ce que** lesdits moyens (20) pour l'éjection de cailloux comprennent :
- deux protubérances (22a, 22b) faisant saillie par rapport au fond (16) de la cavité externe, les deux protubérances (22a, 22b) étant disposées en vis-à- vis, au moins en partie, l'une par rapport à l'autre, à une distance d ;
- la surface de contact de chaque protubérance (22a, 22b) s'inclinant par rapport à la direction radiale respectivement à partir d'une paroi latérale (18a, 18b) de la cavité externe (14) vers le plan central P ;
- la distance d entre les deux protubérances (22a, 22b) en vis-à-vis étant inférieure ou égale à 10% de la largeur W de la cavité externe (14).

2. Bande de roulement selon la revendication 1 , **caractérisée en ce que** la distance d entre les deux protubérances (22a, 22b) est inférieure ou égale à 5 % de la largeur W de la cavité externe.

3. Bande de roulement selon l'une des revendications 1 ou 2, **caractérisée en ce que** la distance d est inférieure ou égale à 1 mm.

4. Bande de roulement selon l'une quelconque des
revendications 1 à 3, **caractérisée en ce qu'**au moins une protubérance (22a, 22b) présente une surface de contact (19) adaptée pour entrer en contact avec un caillou, ladite surface de contact (19) ayant une zone d'accroche (21 ) avec la paroi latérale de la cavité externe de longueur G et une zone de délimitation (23) dans la cavité externe opposée à la zone d'accroche (21 ) et de longueur 1", la longueur G de la zone d'accroche (21 ) étant supérieure à la longueur I" de la zone de délimitation (23).

5. Bande de roulement selon l'une quelconque des revendications 1 à 4, **caractérisée en ce que** l'angle de l'inclinaison (b) de la surface de contact de la protubérance (22a, 22b) par rapport à la direction radiale est supérieure ou égale à 17°.

6. Bande de roulement selon l'une quelconque des revendications 1 à 5, **caractérisée en ce que** la paroi latérale de la cavité externe (14) est inclinée, au moins en partie, par rapport à la surface de roulement de la bande de roulement, et l'angle de l'inclinaison ( b) de la surface de contact de la protubérance (22a, 22b) est supérieure à l'inclinaison (a a) de la dite paroi latérale par rapport à la direction radiale.

7. Bande de roulement selon l'une quelconque des
revendications 1 à 6, **caractérisée en ce que** les protubérances (22a, 22b) sont décalées l'une par rapport à l'autre selon une direction circonférentielle.

## Patentansprüche

1. Lauffläche für einen Lastkraftwagenreifen, beinhaltend eine Laufoberfläche (12), die dazu bestimmt ist, während eines Fahrvorgangs mit einer Fahrbahn in Kontakt zu kommen, wobei die Lauffläche (10) Hohlräume beinhaltet, die im Neuzustand an der Laufoberfläche münden und als externe Hohlräume (14) bezeichnet werden, wobei die Lauffläche eine Vielzahl von Hohlräumen (15) beinhaltet, die im Neuzustand nicht an der Laufoberfläche der Lauffläche münden und als interne Hohlräume (15) bezeichnet werden, wobei die internen Hohlräume zusammen mit den externen Hohlräumen (14) eine durchgehende Rille gemäß einer Umfangsrichtung bilden,
- wobei die externen Hohlräume (14) eine Länge L, eine Breite W und eine Mittelebene P aufweisen,
- wobei die externen Hohlräume (14) einen Boden (16) und mindestens zwei sich gegenüberliegende Seitenwände (18a, 18b), die sich von dem Boden (16) erstrecken, beinhalten, wobei die externen Hohlräume (14) Mittel (20) zum Ausstoßen von Steinen während des Fahrvorgangs beinhalten, **dadurch gekennzeichnet, dass** die Mittel (20) zum Ausstoßen von Steinen Folgendes beinhalten:
- zwei Vorsprünge (22a, 22b), die von dem Boden (16) des externen Hohlraums vorstehen, wobei die zwei Vorsprünge (22a, 22b) mindestens teilweise gegenüberliegend mit einen Abstand d zueinander angeordnet sind;
- wobei sich die Kontaktoberfläche jedes Vorsprungs (22a, 22b) in Bezug auf die radiale Richtung jeweils von einer Seitenwand (18a, 18b) des externen Hohlraums (14) zu der Mittelebene P neigt;
- wobei der Abstand d zwischen den zwei gegenüberliegenden Vorsprüngen (22a, 22b) kleiner als oder gleich 10 ö der Breite W des externen Hohlraums (14) ist.

2. Lauffläche nach Anspruch 1, **dadurch gekennzeichnet, dass** der Abstand d zwischen den zwei Vorsprüngen (22a, 22b) kleiner als oder gleich 5 ö der Breite W des externen Hohlraums ist.

3. Lauffläche nach einem der Ansprüche 1 oder 2, **dadurch gekennzeichnet, dass** der Abstand d kleiner als oder gleich 1 mm ist.

4. Lauffläche nach einem beliebigen der Ansprüche 1 bis 3, **dadurch gekennzeichnet, dass** mindestens ein Vorsprung (22a, 22b) eine Kontaktoberfläche (19) aufweist, die dazu angepasst ist, mit einem Stein in Kontakt zu kommen, wobei die Kontaktoberfläche (19) einen Verbindungsbereich (21) zu der Seitenwand des externen Hohlraums mit einer Länge G und einen Begrenzungsbereich (23) in dem externen Hohlraum, der dem Verbindungsbereich (21) gegenüberliegt und die Länge I" aufweist, aufweist, wobei die Länge G des Verbindungsbereichs (21) größer ist als die Länge I" des Begrenzungsbereichs (23).

5. Lauffläche nach einem beliebigen der Ansprüche 1 bis 4, **dadurch gekennzeichnet, dass** der Winkel der Neigung (b) der Kontaktoberfläche des Vorsprungs (22a, 22b) in Bezug auf die radiale Richtung größer als oder gleich 17° ist.

6. Lauffläche nach einem beliebigen der Ansprüche 1 bis 5, **dadurch gekennzeichnet, dass** die Seitenwand des externen Hohlraums (14) in Bezug auf die Laufoberfläche der Lauffläche mindestens teilweise geneigt ist und der Winkel der Neigung (b) der Kontaktoberfläche des Vorsprungs (22a, 22b) größer ist als die Neigung (a a) der Seitenwand in Bezug auf die radiale Richtung.

7. Lauffläche nach einem beliebigen der Ansprüche 1 bis 6, **dadurch gekennzeichnet, dass** die Vorsprünge (22a, 22b) gemäß einer Umfangsrichtung zueinander versetzt sind.

## Claims

1. Tread for a heavy-duty tyre, comprising a tread surface (12) intended to come into contact with a road surface during running, said tread (10) comprising at least cavities that open onto the tread surface in the new state, called external cavities (14), the tread comprising a plurality of cavities (15) that do not open onto the tread surface of the tread in the new state, called internal cavities (15), said internal cavities forming with the external cavities (14) a continuous groove in a circumferential direction.
- said external cavities (14) having a length L, a width W and a central plane P,
- said external cavities (14) comprising a bottom (16) and at least two opposite lateral walls (18a, 18b) extending from said bottom (16), said external cavities (14) comprising means (20) for ejecting stones during said running, **characterized in that** said means (20) for ejecting stones comprise:
- two protuberances (22a, 22b) protruding from the bottom (16) of the external cavity, the two protuberances (22a, 22b) being disposed at least partially opposite one another at a distance d;
- The contact surface of each protuberance (22a, 22b) being inclined relative to the radial direction respectively from a lateral wall (18a, 18b) of the external cavity (14) towards the central plane P;
- the distance d between the two opposite protuberances (22a, 22b) being less than or equal to 10% of the width W of the external cavity (14).

2. Tread according to Claim 1, **characterized in that** the distance d between the two protuberances (22a, 22b) is less than or equal to 5% of the width W of the external cavity.

3. Tread according to either of Claims 1 and 2, **characterized in that** the distance d is less than or equal to 1 mm.

4. Tread according to any one of Claims 1 to 3, **characterized in that** at least one protuberance (22a, 22b) has a contact surface (19) designed to come into contact with a stone, said contact surface (19) having a region (21) of attachment to the lateral wall of the external cavity, of length l', and a delimiting region (23) in the external cavity, on the opposite side from the attachment region (21) and of length l", the length l' of the attachment region (21) being greater than the length l" of the delimiting region (23).

5. Tread according to any one of Claims 1 to 4, **characterized in that** the inclination (β) of contact surface of the protuberance (22a, 22b) relative to the radial direction is greater than or equal to 17°.

6. Tread according to any one of Claims 1 to 5, **characterized in that** the lateral wall of the external cavity (14) is at least partially inclined with respect to the tread surface of the tread, and the angle of the inclination (β) of the contact surface of the protuberance (22a, 22b) is greater than the inclination (a) of said lateral wall relative to the radial direction.

7. Tread according to any one of Claims 1 to 6, **characterized in that** the protuberances (22a, 22b) are offset with respect to one another in a circumferential direction.
